# EUROPÄISCHE PATENTSCHRIFT

(11) **EP 2 217 635 B1**
(45) Veröffentlichungstag und Bekanntmachung des Hinweises auf die Patenterteilung: **02.11.2011**
(21) Anmeldenummer: 08855721.0
(22) Anmeldetag: 28.11.2008
(51) Int. Cl.: C08G 18/42, C08L 67/04, C08L 75/06

(54) **BIODEGRADABLES VERBUNDSYSTEM UND DESSEN VERWENDUNG**
BIODEGRADABLE COMPOSITE SYSTEM AND THE USE THEREOF
SYSTÈME COMPOSITE BIODÉGRADABLE, ET SON UTILISATION

(30) Priorität: 30.11.2007 DE 102007057768
(43) Veröffentlichungstag der Anmeldung: 18.08.2010
(73) Patentinhaber: Universität Ulm, 89081 Ulm (DE)
(72) Erfinder: SELIGER, Hartmut, 89275 Elchingen-Thalfingen (DE); HÄBERLEIN, Hans, 86368 Gersthofen (DE)
(74) Vertreter: Pfenning, Meinig & Partner GbR
(86) Internationale Anmeldenummer: PCT/EP2008/010132
(87) Internationale Veröffentlichungsnummer: WO 2009/068309

(56) Entgegenhaltungen:
- WO-A-2005/121216
- US-A- 5 939 467
- SAAD G R ET AL: "Biodegradable copolymers based on bacterial Poly((R)-3-hydroxybutyra te): thermal and mechanical properties and biodegradation behaviour" 1. Januar 2004 (2004-01-01), POLYMER DEGRADATION AND STABILITY, BARKING, GB, PAGE(S) 101 - 110 , XP004496303 ISSN: 0141-3910 das ganze Dokument
- SINGH S ET AL: "Renewable resource based biocomposites from natural fiber and polyhydroxybutyrate-co-valerate (PHBV) bioplastic" 1. Mai 2008 (2008-05-01), COMPOSITES PART A: APPLIED SCIENCE AND MANUFACTURING, ELSEVIER SCIENCE PUBLISHERS B.V., AMSTERDAM, NL, PAGE(S) 875 - 886 , XP022611379 ISSN: 1359-835X [gefunden am 2008-01-20] das ganze Dokument

## Beschreibung

Die Erfindung betrifft ein Verbundsystem aus mindestens einem bioabbaubaren Blend, enthaltend mindestens ein bioabbaubares Blockcopolyesterurethan (PEU) sowie mindestens einem Polyhydroxyalkanoat (PHA), gegebenenfalls einem Füllstoff aus einem Polysaccharid und/oder dessen Derivaten sowie ggf. weiteren bioverträglichen Additiven. Derartige Verbundsysteme werden zur Herstellung von Formkörpern, Formteilen oder Extrudaten eingesetzt. Weiterhin betrifft die Erfindung Verwendungsmöglichkeiten des Verbundsystems.

Poly-(R)-3-hydroxyalkanoate (PHA), wie z.B. Poly-(R)-3-hydroxybutyrat (R-PHB), sind nach Umweltgesichtspunkten und aus dem Blickwinkel der Nachhaltigkeit ein nahezu ideales Polymermaterial. Sie werden aus Abfällen der Zuckerproduktion, d.h. aus nachwachsenden Rohstoffen, durch bakterielle Fermentation in technischem Maßstab hergestellt. Es ist unter Bedingungen, unter denen Kunststoffe üblicherweise verwendet werden, stabil, kann aber innerhalb von Wochen bis Monaten in der Deponie bzw. im Kompostierverfahren biologisch abgebaut werden. R-PHB kann thermoplastisch verarbeitet werden und kann als Thermoplast ohne weiteres recycelt werden. Es ist biokompatibel, bioabbaubar und kann als Bestandteil von Implantatmaterialien und als gutes Substrat für Zellwachstum verwendet werden. Durch Abbau von R-PHB konnten stereoreguläre organische Synthesebausteine gewonnen werden.

Das aus Bakterien gewonnene R-PHB hat für viele Anwendungen jedoch ungünstige Materialeigenschaften. Es ist spröde und unelastisch und die Herstellung transparenter Folien ist nicht möglich. Der Schmelzpunkt liegt mit 177° C so hoch, dass sich bis zur beginnenden Zersetzung bei ca. 210° C nur ein relativ kleiner Temperaturbereich für die thermoplastische Verarbeitung ergibt. Alle diese Nachteile ergeben sich aus der hohen Kristallinität des R-PHB. Schließlich verbleiben aus der Aufarbeitung des biologischen Materials oft noch Zelltrümmer, die sich während der Verarbeitung zersetzen, was zu einer unangenehmen Geruchsbelästigung führt.

Um die Schwierigkeiten der thermoplastischen Verarbeitung zu beheben, wurden vor allem zwei Wege beschritten. So wurde einerseits versucht, durch physikalische Maßnahmen, insbesondere durch Kristallisationsverzögerung, niedrige Verarbeitungstemperaturen einzustellen. Auf der anderen Seite wurden Bakterienkulturen und Substrate verwendet, die die Produktion von Copolymeren, insbesondere von Poly-3-hydroxy-butyrat-co-3-hydroxy-valerat, ermöglichen. Im ersten Fall führt die Alterung dennoch zu einer Nachkristallisation, d.h. Versprödung. Im letzteren Fall wird zwar eine Absenkung der Schmelztemperatur und Erhöhung der Elastizität erreicht, jedoch ist die Möglichkeit zur Steuerung der Eigenschaften durch bakterielle Copolymerisation nur in engen Grenzen gegeben.

Poly-(R)-3-hydroxy-butyrat-co-valerat (PHB-HV) ist zwar niedriger schmelzend; Bakterien bauen aber nur einen relativ kleinen Hydroxyvalerat-Anteil ein (bis ca. 12 %), während gute Materialeigenschaften erst ab ca. 20 % HV-Anteil erwartet werden.

Hiervon ausgehend war es Aufgabe der vorliegenden Erfindung, ein Polymersystem bereitzustellen, das die genannten Nachteile des Standes der Technik beseitigt und ein Polymermaterial bereitstellt, dessen Elastizität steuerbar ist, wobei das Material vollständig biologisch abbaubar sein soll.

Diese Aufgabe wird durch das gattungsgemäße Verbundsystem mit den Merkmalen des Anspruchs 1 sowie durch die hiernach hergestellten Formkörper, Formteile und Extrudate gemäß Anspruch 16 gelöst. In Anspruch 17 wird die Verwendung der erfindungsgemäßen Verbundsysteme beschrieben. Die weiteren abhängigen Ansprüche zeigen vorteilhafte Weiterbildungen auf.

Erfindungsgemäß wird ein Verbundsystem, enthaltend mindestens ein bioabbaubares Blockcopolyesterurethan, wobei das Blockcopolyesterurethan aus einem Hartsegment aus einem Polyhydroxyalkanoatdiol sowie einem Polyesterdiol- und/oder einem Polyesteretherdiol-Weichsegment ausgehend von einem Diol und einer Dicarbonsäure oder Hydroxycarbonsäure und deren Derivaten als Co-Komponente durch Verknüpfung mit einem bifunktionellen Isocyanat gebildet ist, sowie mindestens ein Polyhydroxyalkanoat, gegebenenfalls einen Füllstoff aus einem Polysaccharid und/oder dessen Derivaten sowie gegebenenfalls weitere bioverträgliche Additive, bereitgestellt. Wesentlich für das erfindungsgemäße Verbundsystem ist, dass das Blockcopolyesterurethan aus einem Hartsegment aus einem Polyhydroxyalkanoat-Diol sowie einem Polyesterdiol- und/oder einem Polyesterether-Diol-Weichsegment, ausgehend von einem Diol und einer Dicarbonsäure oder Hydroxycarbonsäure und deren Derivaten als Co-Komponente durch Verknüpfung mit einem bifunktionellen Isocyanat gebildet ist. Dabei liegt das Verbundsystem aus PEU und PHA bevorzugt als Blend, Polymermischung und/oder -legierung vor.

Überraschenderweise wurde gefunden, dass die Eigenschaften biosynthetischer PHA's durch Zumischen bzw. Zublenden insbesondere relativ kleiner Mengen PEU wesentlich verbessert werden. Insbesondere ergeben sich dabei die folgenden Vorteile:
- Die Schmelztemperatur wird abgesenkt.
- Der spröde Werkstoffcharakter wird überwunden.
- Es ergeben sich harte/zähe Materialien von hoher Schlagfestigkeit bzw. Kerbschlagzähigkeit.
- Die Härte des Materials kann weiter gesteigert werden durch Zumischen von Flachs-, Hanf- oder Holzfasern.

Ein zweiter attraktiver Gesichtspunkt ist der ökologische: Die erfindungsgerechte Mischung enthält nur ca. 2 bis 5 % an nicht aus nachwachsendem Rohstoff gewonnenen Substanzanteilen, kommt also einem vollständig aus nachwachsendem Rohstoff gewonnenen Bio-Werkstoff, und somit dem Gedanken einer Kreislauf-Wirtschaft, sehr nahe.

Ein weiterer Vorteil des erfindungsgemäßen, durch Mischung erzeugten Materials gegenüber einer alleinigen Verwendung von Polyesterurethanen, bei dem PHB die eine Ausgangskomponente ist bzw. gegebenenfalls als Additiv hinzugefügt werden kann, aber vorteilhafterweise immer nur in geringerer Menge eingesetzt wird, liegt darin, dass erfindungsgemäß die Komponente PEU nun ihrerseits nur in geringer Beimischung zur Hauptkomponente PHA verwendet wird. Daraus ergibt sich ein geringerer Aufwand bei der Herstellung des Materials, da PHA's als biosynthetisches Material direkt verwendet werden, PEU dagegen ein zweistufiges Verfahren zur Umwandlung aus den PHA's erfordert. Damit wird der Bedarf an Lösemitteln und Energie, der zur Herstellung der gleichen Materialmenge erforderlich ist, wesentlich verringert.

Vorteilhaft hierbei ist, wenn der Gewichtsanteil des Blockcopolyesterurethans am Blend von 0,1 bis 50 Gew.-%, bevorzugt von 5 bis 35 Gew.-%, besonders bevorzugt zwischen 5 und 25 Gew.-% und der Gewichtsanteil des Polyhydroxyalkanoats am Blend von 99,9 bis 50 Gew.-%, bevorzugt von 95 bis 65 Gew.-%, besonders bevorzugt zwischen 95 und 75 Gew.-% beträgt.

Das Polyhydroxyalkanoat (PHA) ist hierbei insbesondere ein Poly-2-hydroxyalkanoat, Poly-3-hydroxyalkanoat und/oder Poly-4-hydroxyalkanoat, und/oder ein Polyhydroxyalkanoat, das aliphatische, araliphatische oder aromatische Seitenketten enthält. Insbesondere ist das Polyhydroxyalkanoat (PHA) ausgewählt aus der Gruppe bestehend aus Poly-(R)-3-hydroxybutyrat (PHB) und/oder Poly-(R)-3-hydroxybutyrat-co-valerat (PHB-co-HV).

Vorzugsweise wird die Elastizität, Zähigkeit und Zug-Dehnung des Verbundsystems über den Mengenanteil des Blockcopolyesterurethans und des Füllstoffs gezielt eingestellt.

Das als Hartsegment eingesetzte PolyhydroxyalkanoatDiol ist vorzugsweise ein Poly-2-hydroxyalkanoatdiol, ein Poly-3-hydroxyalkanoat-diol und/oder ein Poly-4-hydroxyalkanoat-diol, und/oder das Polyhydroxyalkanoatdiol enthält aliphatische, araliphatische oder aromatische Seitenketten. Insbesondere ist das Polyhydroxyalkanoat-Diol ausgewählt aus der Gruppe bestehend aus Poly-3-hydroxybutyrat-diol (PHB-Diol) und/oder Poly-3-hydroxybutyrat-co-3-hydroxy-valeratdiol (PHB-co-HV-Diol).

Die Herstellung des Hartsegmentes erfolgt dabei durch eine Umesterung mit einem Diol, das 2 bis 10 C-Atome enthält und vorzugsweise aliphatisch, cycloaliphatisch, araliphatisch und/oder aromatisch ist, aber auch ein Oligo- oder Polyetherdiol, beispielsweise Polyethlylenglykol-200 oder -300 sein kann. Besonders bevorzugt wird als Diol 1,4-Butandiol oder Diethylenglykol verwendet.

Die Herstellung des Hartsegments kann auch mit einem Triol erfolgen. Besonders bevorzugt ist dabei Glyzerin.

Das Weichsegment wird durch Umesterung einer Dicarbonsäure mit einem Diol hergestellt. Die Dicarbonsäure ist dabei vorzugsweise aliphatisch, cycloaliphatisch, araliphatisch und/oder aromatisch. Für die Umesterung werden aliphatische, cycloaliphatische, araliphatische und/oder aromatische Diole bevorzugt.

Besonders bevorzugt ist hierbei 1,4-Butandiol oder Diethylenglykol.

Als Weichsegment wird vorzugsweise Polybutylenglycol-adipat-Diol (PBA-Diol) eingesetzt.

Weiterhin ist das erfindungsgemäße Blockcopolyesterurethan aus einem bifunktionellen Isocyanat, das vorzugsweise aliphatisch, cycloaliphatisch, araliphatisch und/oder aromatisch ist, als Verknüpfungsglied aufgebaut. Besonders bevorzugt ist das bifunktionelle Isocyanat ausgewählt aus der Gruppe Tetramethylendiisocyanat, Hexamethylendiisocyanat und Isophorondiisocyanat.

Als bioabbaubare Füllstoffe werden auf Polysacchariden basierende Füllstoffe vorzugsweise solche aus der Gruppe Stärke und deren Derivate, Cyclodextrine sowie Zellstoff, Papiermehl und Cellulosederivate, wie Celluloseacetate oder Celluloseether, eingesetzt. Besonders bevorzugt als Cellulosederivate sind dabei Verbindungen aus der Gruppe Methylcellulose, Ethylcellulose, Dihydroxypropylcellulose, Hydroxyethylcellulose, Hydroxypropylcellulose, Hydroxybutylcellulose, Methylhydroxybutylcellulose, Ethylhydroxybutylcellulose, Ethylhydroxyethylcellulose, Carboxyalkylcellulose, Sulfoalkylcellulose und Cyanoethylcellulose.

Der Füllstoff ist vorzugsweise ein Naturprodukt und wird vorzugsweise in Faserform, beispielsweise als Flachsfaser, Hanf oder Holzmehl, eingesetzt.

Neben den genannten Hauptbestandteilen können weiterhin Additive im Verbundsystem enthalten sein. Hierzu zählen vorzugsweise biokompatible Haftvermittler, Farbpigmente oder Entformungsmittel wie Talkum. Auch Ruß kann als weiteres Additiv enthalten sein. Besonders bevorzugt sind als Additive Polyethylenglycol und/oder Polyvinylalkohol als bioverträgliche Haftvermittler.

Hinsichtlich der Mengenanteile der einzelnen Komponenten ist das Verbundsystem nicht beschränkt. Vorzugsweise enthält das Verbundsystem zwischen 1 und 90 Gew.-% des Füllstoffs, besonders bevorzugt zwischen 1 und 70 Gew.-%. Diese Mengenangaben beziehen sich auf das Gesamtverbundsystem.

In einer bevorzugten Ausführungsform ist das Verbundsystem schichtweise aufgebaut, wobei eine auf Polysacchariden basierende Füllstoffschicht zumindest bereichsweise ein- und/oder beidseitig mit dem Blend beschichtet ist.

In einer weiteren bevorzugten Ausführungsform ist dem Verbundsystem mindestens ein weiteres Polymer zugeblendet oder zulegiert.

Erfindungsgemäß werden ebenso Formkörper, Formteile und Extrudate, die aus einem Verbundsystem nach einem der Ansprüche 1 bis 22 hergestellt wurden, bereitgestellt.

Die erfindungsgemäßen Verbundsysteme werden zur Herstellung von Beschichtungsmaterialien, Folien, Filmen, Laminaten, Formkörpern, Formteilen, Extrudaten, Behältern, Verpackungsmaterialien, Coating-Materialien und Medikamentendarreichungsformen verwendet. Die Anwendungsgebiete für derartige Materialien sind sehr breit und betreffen beispielsweise Türseitenverkleidungen und Anbauteile im Innenraum im Automobilbereich, Sitzschalen und Rückenlehnen von Möbeln, Schneckenfallen, Grableuchten im Gartenbau, Golf-Ties, Batteriehalterungen im Spielzeugbereich, Schutzelemente im Verpackungsbereich, verlierbare Teile im Bausektor oder auch z.B. Weihnachtsschmuck.

Anhand der nachfolgenden Figuren und Beispiele soll der erfindungsgemäße Gegenstand näher erläutert werden, ohne diesen auf die hier gezeigten speziellen Ausführungsformen zu beschränken.
Fig. 1 zeigt das Syntheseschema für die Darstellung eines Polyesterurethans.
Fig. 2 zeigt das ¹H-Kernresonanzspektrum (400 MHz) des PHB-Diols.
Fig. 3 zeigt das ¹H-Kernresonanzspektrum von Polyesterurethan 50:50 (400 MHz).
Fig. 4 zeigt einen Vergleich der Kerbschlagzähigkeit von Bio-Polyesterurethan-Kompositen mit Flachs- bzw. Holzmehl-Füllung.

### Beispiel 1

### Herstellung der Block-copolyesterurethane

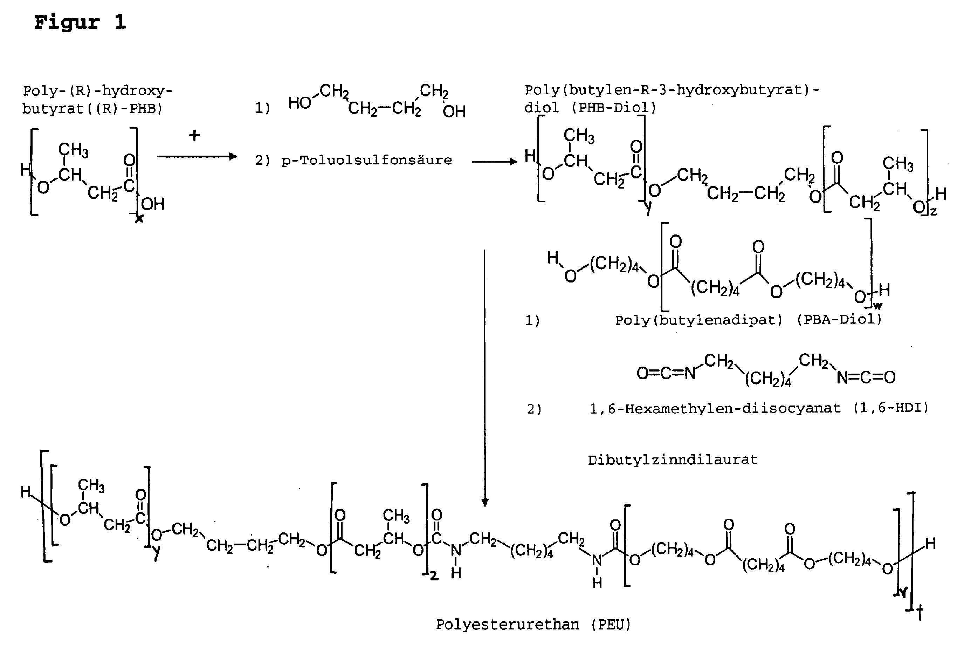

Das Polyesterurethan wird nach einer Variante von G. R. Saad dargestellt (G. R. Saad, Y. J. Lee, H. Seliger, J. Appl. Poly. Sci. 83 (2002) 703-718), die auf einer Vorschrift von W. Hirt et al. (7, 8) basiert. Die Synthese erfolgt in zwei Stufen. Bakterielles Poly-3-hydroxybutyrat (PHB Industrial S.A.) wird zunächst in Gegenwart von Schwefelsäure als Katalysator mit 1,4-Butandiol umgesetzt. Nach Aufreinigung wird ebenfalls katalytisch (Zirconiumacetylacetonat) das erhaltene, kurzkettige Butylenglykol-bis-(poly-(R)-3-hydroxybutyrat)-diol (PHB-diol) mit Poly(butylenadipat)-diol (PBA-diol) als Cokomponente und Hexamethylendiisocyanat zu Polyesterurethan polyaddiert. In Figur 1 ist das Syntheseschema für die Darstellung des Polyesterurethans dargestellt.

### 1.1. Darstellung von Poly(butylen-(R)-3-hydroxy-butyrat)-diol

Poly(butylen-(R)-3-hydroxybutyrat)-diol wurde in verschiedenen Ansätzen hergestellt. Bakterielles PHB wurde dabei in Chloroform gelöst und mit 1,4-Butandiol bei 61° C transesterifiziert. Als Katalysator wurde p-Toluolsulfonsäure verwendet. Durch anschließendes Fällen und Nachwaschen wurde das Produkt in fester Form erhalten.

Bei den einzelnen Versuchen wurden verschiedene Parameter, wie Morphologie von PHB, Lösemittelmenge, Katalysatormenge, Rührzeit, Aufarbeitung variiert.

Es wurde gemahlenes und faserförmiges PHB verwendet. Unter den gewählten Bedingungen konnte PHB nicht vollständig gelöst werden. Deshalb war der Kolbeninhalt vor der Zugabe von 1,4-Butandiol und p-Toluolsulfonsäure breiförmig, aber in der Hitze noch gut rührbar. Mit zunehmender Reaktionszeit wurde die Reaktionsmasse zunehmend dünnflüssiger, blieb aber trüb. Desweiteren war eine fast lineare Abhängigkeit der Reaktionszeit von der Katalysatormenge festzustellen.

Große Unterschiede gab es bei der Fällung der Chloroformlösungen in Methanol, Diethylether, Toluol und Cyclohexan. Während mit Methanol, Toluol und Cyclohexan sehr feinkristalline Präzipitate entstanden, die sich sehr schwer absaugen und waschen ließen, ergab Diethylether ein sehr sauberes, grobkristallines Material. Die Molgewichte unterschieden sich dagegen kaum. Cyclohexan wurde einer genaueren Untersuchung unterzogen. Dabei ergab sich unabhängig von der Löse-/ Fällungsmittelkonzentration, nur feinkristallines Produkt. Wird die Reaktionslösung vorgelegt und Cyclohexan zugetropft, verhält sich die Präzipitation vollständig anders. Nach einer anfänglichen Trübung fiel das Produkt in recht grober Pulverform an und ließ sich genauso gut filtrieren wie die Feststoffe aus Diethylether. Alle Feststoffe fielen als fast weiße Pulver an.

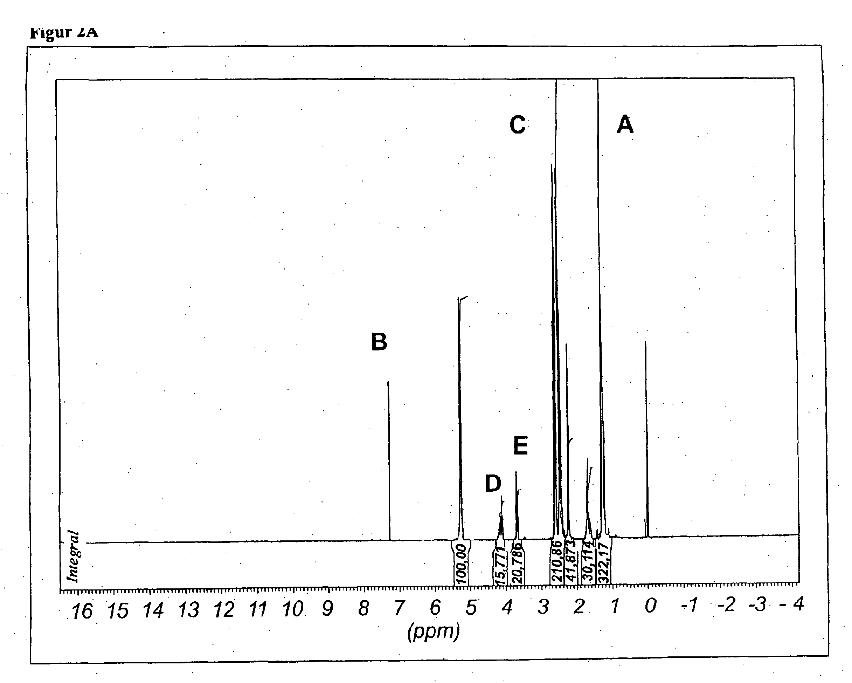

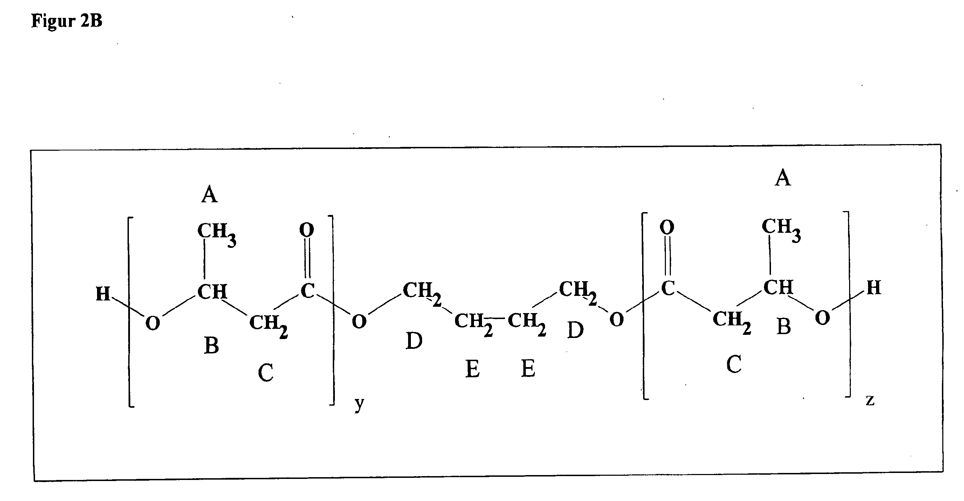

Die Ausbeuten betrugen 60 bis 94 % der Theorie. Die Mₙ betrugen zwischen 1500 und 5500 g/mol. Die Produkte wurden mittels ¹H-Kernresonanzspektroskopie untersucht (s. Fig. 2).

### 1.2. Allgemeine Verfahrensvorschrift zur Synthese der Makro-diol I (PHB-diol, PHB-co-HV-diol) Komponenten

Dioxan und Diol-Komponente werden auf 85° bis 90° aufgeheizt. 98%ige Schwefelsäure wird vorsichtig zugesetzt. Dann wird PHA zugegeben. Es wird unter Rühren auf Rückfluss aufgeheizt. Nach vollständiger Homogenisierung lässt man am Rückfluss reagieren, wobei in der Regel eine nahezu klare Lösung entsteht. Nach der Reaktion wird auf 85° abgekühlt. Zur Neutralisation wird eine 45 %ige Lösung von KOH in Wasser zugegeben. Dann wird die Reaktionsmasse langsam zum Fällungsmittel (25 % Dioxan + 75 % Cyclohexan) zugegeben. Dann lässt man die Masse auf Raumtemperatur abkühlen und filtriert das Makro-diol I ab.
Ausbeute: 90 - 96% d. Th.

Charakterisierung und Eigenschaften der Makro-diol I - Komponenten:

### Chemische Charakterisierung:

Die wesentliche Methode für die Charakterisierung der Makrodiol I - Komponenten war nach wie vor die ¹H-NMR - Spektroskopie. Figur 2 zeigt das NMR-Spektrum einer Charge von Butandiol-bis-PHB. Aus dem NMR - Spektrum sind sowohl die Strukturzuordnung als auch, aus der Integration, die Berechnung des Molekulargewichts möglich.

### 1.3. Vorschrift für die Kieinmengen-Synthese von Makro-diolen II (Weichsegment - Makro-diolen)

Bei allen bisher beschriebenen Ansätzen wurde von einer käuflichen Makro-diol-Komponente II ausgegangen, zunächst Poly-ε-caprolacton, danach in der Regel meistens Poly-butylenglykol-adipat-diol, gelegentlich Poly-diethylenglykol-adipat-diol. Die Synthese der Makro-diol-Komponente II erfolgte nach folgender allgemeinen Vorschrift:
Der einzusetzende Dicarbonsäure-dimethylester und das Diol werden im Verhältnis 18 : 19 gemischt. Die Komponenten werden aufgeschmolzen in Gegenwart katalytischer Mengen des Transesterifizierungskatalysators (z.B. Dibutylzinnoxid). Das freiwerdende Methanol wird unter Normaldruck abdestilliert. Die ÖlbadTemperatur wird dann von 140° auf ca. 70° reduziert, weitere 5 Std. Wasserstrahlvakuum angelegt zur Entfernung von Rest-Methanol. Das entstehende Produkt fällt als Schmelze an. Es wird in flüssiger Form, entweder als Schmelze oder als Dioxan-Lösung, in die Reaktion zum Polyester-urethan eingesetzt. Die gleiche Vorschrift ist auch für die Synthese von Makro-diolen II unter Verwendung von Hydroxycarbonsäuren oder deren Derivaten, statt Dicarbonsäure-dimethylester + Diol, anwendbar.

### 2. Synthesevorschriften für die Herstellung von Polyester-urethanen

### 2.1. Darstellung der Polyesterurethane (Variante 1)

Nach teilweiser, azeotroper Destillation des 1,2-Dichlorethans wurden die Polyesterurethane durch Polyaddition von Poly(-(R)-3-hydroxybutyrat)-diol und Poly(butylenadipat)-diol mit 1,6-Hexamethylendiisocyanat synthetisiert (nach G. R. Saad). Dibutylzinndilaurat wurde als Katalysator verwendet. Die Polymere wurden ausgefällt, gewaschen und getrocknet. Die Analyse erfolgte wiederum mittels GPC und ¹H-NMR-Spektroskopie. Untersucht wurden hierbei die Zusammensetzung der Produkte in Abhängigkeit vom Mischungsverhältnis der Edukte, der Destillationsmenge an Azeotrop, der Katalysatormenge, der Reaktionszeit, der Menge an 1,6-Hexamethylendiisocyanat und der Lösemittelkonzentration.

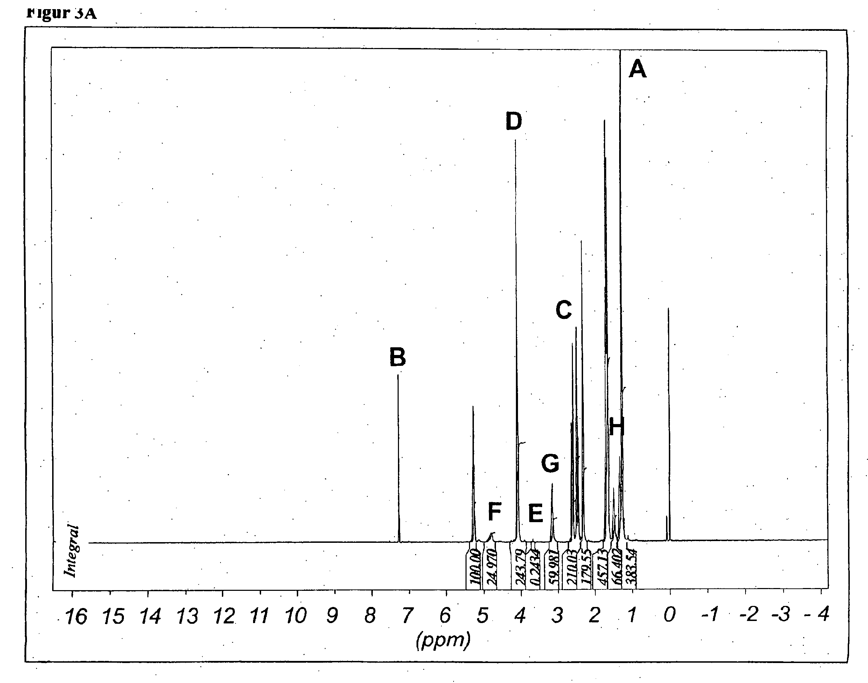

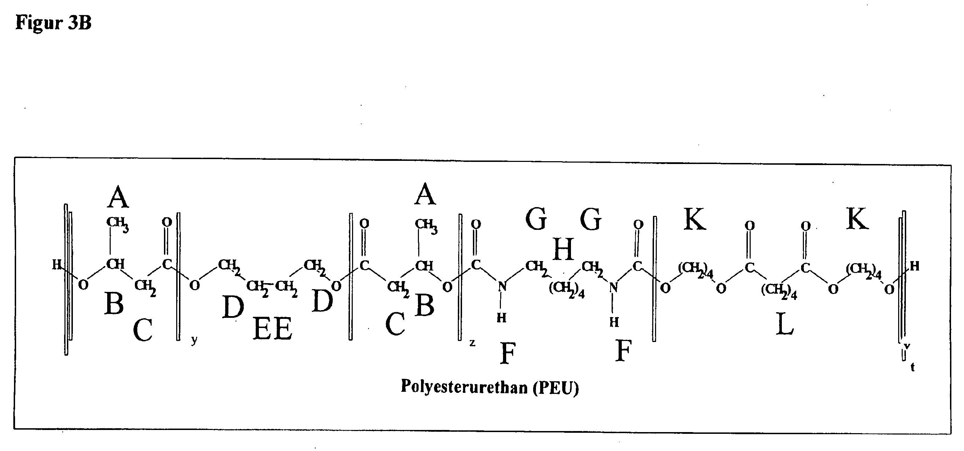

Exemplarisch zeigt Fig. 3 das ¹H-NMR-Spektrum von Polyesterurethan 50:50 (400 MHz).

In weiteren Versuchen hat sich gezeigt, dass weitere Verbesserungen gegenüber der Vorschrift von G.R. Saad erzielt werden können.

Zum einen kann 1,2-Dichlorethan ohne Nachteile durch 1,4-Dioxan ersetzt werden. Zum anderen wurde der zinnorganische Katalysator durch verschiedene Metallacetylacetonate substituiert. Insbesondere fiel der Zirkonium-(IV)-acetylacetonat-Katalysator durch eine hohe Aktivität (Verringerung der Reaktionszeit) und eine hohe Selektivität (geringe Allophanatbildung) positiv auf.

Bei der Verwendung der Metallacetylacetonate als Katalysator ist hervorzuheben, dass es sich hierbei im Gegensatz zu zinnorganischen Katalysatoren mit deren teilweise karzinogenem Potential um bioverträgliche Katalysatoren handelt. Auf diese Weise konnte überraschend ein Reaktionssystem bereitgestellt werden, das alleine aus bioverträglichen Komponenten, d.h. Edukten, Lösungsmitteln und Katalysatoren beruht.

Für die Umsetzung von PHB-Diol und PBA-Diol (im Gewichtsverhältnis 1:1) mit äquimolaren Mengen an 1,6-Hexamethylendiisocyanat (PEU 50:50) bei 75°C wurden folgende Ergebnisse ersielt (Tabelle 1).

**Tabelle 1**

| **Katalysator** | **Molekulargewicht** |
|---|---|
| **Mangan(II)acetylacetonat** | **6300 g/mol** |
| **Aluminium(III)acetylacetonat** | **16000 g/mol** |
| **Zirkonium(IV)acetylacetonat** | **43000 g/mol** |

Die beiden Komponenten PHA und PEU werden typischerweise im Verhältnis 80/20 bis 90/10 miteinander gemischt. Der Anteil an PEU kann sich jedoch allgemein im Bereich von 1 % bis 50 % bewegen. Die Zusammensetzung der PEU-Komponente ist typischerweise so, dass PHB-diol:PBA-diol-(= Polybutylenglykoladipat-Diol)-Segmente im Verhältnis von etwa 40:60 bis 80:20 enthalten sind, vorzugsweise im Verhältnis 60:40. Die Mischung wird vorzugsweise so hergestellt, dass die Komponenten im Extruder in der Schmelze zusammengemischt werden. Alternativ können die Komponenten in Lösung gemischt werden, wobei sich z.B. 1,4-Dioxan, 1,3-Dioxolan oder Chloroform als Lösungsmittel anbieten.

### 2.2. Darstellung der Polyesterurethane (Variante 2)

Eine Mischung von Makro-diol I und Makro-diol II im vorgegebenen Input-Verhältnis werden in Dioxan und Fällungsmittel (25 % Dioxan + 75 % Cyclohexan)im Verhältnis 4 : 1 gelöst. Die gesamte Lösemittelmenge wird durch Abdestillieren auf 3/5 des Volumens reduziert (optimal für Ansatz 60 % PHB-diol und 40 % PBA-diol; bei Ansatz 40 % PHB-diol und 60 % geht man von Dioxan : Fällungsmittel = 6 : 1 aus und destilliert ab auf 5/6 des Volumens). Dabei wird gleichzeitig Rest-Wasser ausgetragen. Die Temperatur wird dann von 101° auf 92° reduziert. Zirkoniumacetylacetonat wird zugesetzt. Anschließend wird eine äquimolare Menge an Hexamethylendiisocyanat während 2,5 Std. tropfenweise zugefügt; die Reaktion läuft dann insgesamt 4 Std. Dann wird Fällungsmittel (25 % Dioxan + 75 % Cyclohexan) vorgelegt. Die heiße Reaktionslösung wird langsam unter Rühren eingetragen. Das Polyester-urethan fällt aus und wird nach dem Abkühlen auf Raumtemperatur abfiltriert. Das Material trocknet an der Luft nach der Filtration. Typischerweise wird eine Ausbeute von > 98 % erreicht.

### 3. Blends aus Bio-Polyester-urethan und PHB bzw. PHB-co-HV

### PEU-Komponenten:

PEU aus Diethylenglykol-bis-PHB (60 bzw. 65 % Gew.-%) und PBA-diol (40 bzw. 35 % Gew.-%)

### PHB-co-HV:

PHB-co-HV mit 15 % HV-Anteil (bestimmt aus der Auswertung des NMR-Spektrums, PHB Industrial S.A.)

### Fasermaterialien:

Dampfdruck-aufgeschlossene Flachsfasern (Flachs DDA ), Holzfasern in Form von Holzmehl, Holzschliff, Holzhackschnitzeln

### 3.1. Mechanische Eigenschaften der Blends von PEU und PHB-co-HV

Hergestellt wurden folgende Blends (Angaben jeweils in Gew.-%):
- 90 % PHB-co-HV + 10 % PEU aus Diethylenglykol-bis-PHB + PBA 60 : 40
- 80 % PHB-co-HV + 20 % PEU aus Diethylenglykol-bis-PHB + PBA 60 : 40
- 70 % PHB-co-HV + 30 % PEU aus diethylenglykol-bis-PHB + PBA 60 : 40

Die ermittelten mechanischen Eigenschaften sind in Tabelle 2 zusammengestellt.

Der Zug-E-Modul dieser Proben liegt mit ca. 420 - 500 N/mm² deutlich höher als der der bisher betrachteten nicht Faser-verstärkten PEU-Proben (vgl. Proben Nr. 1-6 in Tab. 2). Ähnliches gilt für den Biege-E-Modul.

### 3.2. Beispiel: Verstärkung mit Naturfasern

### Fasermaterialien:

Die Auswahl der Fasermaterialien erfolgte im Wesentlichen auf der Basis, dass sie leicht, zu niedrigem Preis sowie in beliebiger Menge und geeigneter Spezifikation zu beschaffen waren. Standardmäßig wurden eingesetzt:
- Dampfdruck - aufgeschlossene Flachsfasern (Flachs DDA)
- Holzfasern in Form von Holzschliff, Holzhackschnitzeln, z. T. als vorbehandelte Holzfasern

### Einarbeitung der Fasern in die Blends:

Die Einarbeitung der Faserkomponenten erfolgte
- in einem Kneter, oder
- in einem Walzwerk

Tabelle 3 fasst die Erfahrungen zusammen, die bei der Verarbeitung im Kneter gesammelt wurden. Die Einarbeitung der Fasern erfolgte unter sehr verschiedenen Temperaturbedingungen unterhalb oder oberhalb des Schmelzpunkts, und über einen kürzeren (ca. 50 min.) oder längeren (ca. 1,5 h) Zeitraum. Generell ließen sich Holzhackschnitzel besser einarbeiten als Flachsfasern. Die Polymer-Holz-Masse verfärbt sich braun, wobei bei höherer Temperatur beginnende Zersetzung nicht auszuschließen ist. Die Faser-Einarbeitung führt zu einem grauen, bei längerer Behandlung bei höherer Temperatur grau-braunen Material.

### 3.3. Mechanische Eigenschaften der Blends mit Faserfüllung

Ein dramatischer Eigenschafts-Sprung in eine neue Größenordnung ergibt sich, wenn zu einem Blend-Material aus 80 % PHB-co-HV + 20 % PEU aus Diethylenglykol-bis-PHB : PBA = 60 :40 ca. 30 % Flachs- oder Holzfasern zugemischt werden. Tabelle 2 weist für diese Proben Zug- und Biege-E-Moduli im Bereich von 4500 bis 5000 N/mm² aus. Zum Vergleich sind in Tabelle 3 die bestimmten mechanischen Eigenschaften von Erdöl-basierten Verbundmaterialien mit Naturfasern wiedergegeben, wie z.B. die Zug- und Biegefestigkeit von Polypropylen, gefüllt mit Flachs und Baumwolle.

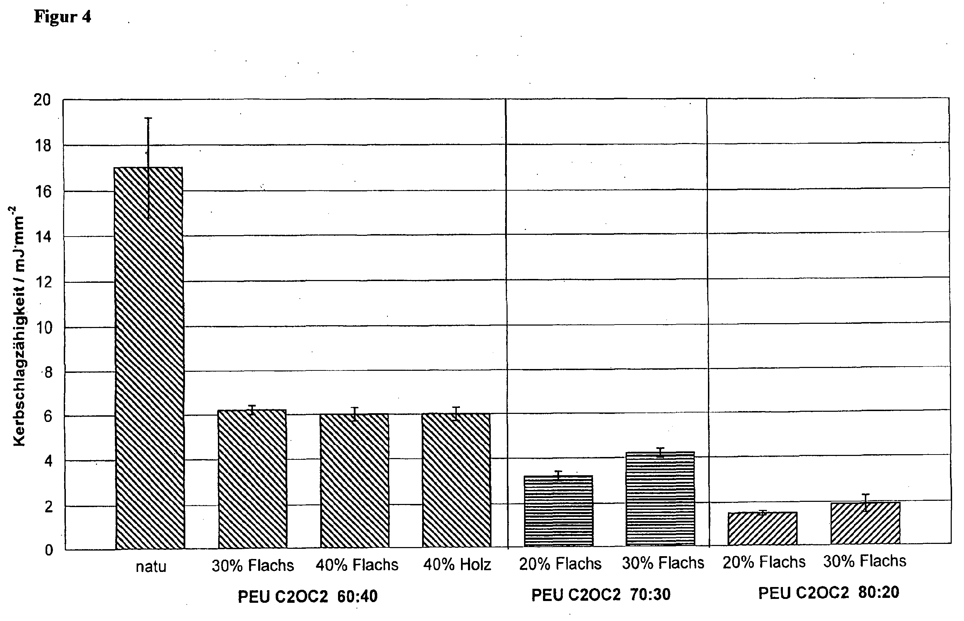

Wie man aus der Gegenüberstellung sieht, werden die für Faserverbundmaterialien auf Polypropylen-Basis vorliegenden Werte der mechanischen Eigenschaften mit diesen hergestellten neuen Materialien auf Bio-Basis erreicht, wenn nicht sogar übertroffen, zumindest was Zug- und Biege-E-Moduli angeht. Die Kerbschlagzähigkeit bleibt in der in Fig. 4 gezeigten Größenordnung. Nur die Elastizität, repräsentiert durch die Zug- und Biegedehnung, nimmt etwas ab.

### 4. Diskussion : PEU-PHB-co-HV-Blends und Komposite

Durch die erfindungsgemäßen Blends umfassend PEU und PHB-co-HV ist die Tür zu einer neuen, in jeder Hinsicht besseren und vorteilhaften Materialschiene aufgetan worden, wie durch die folgende die wesentlichen Vorteile der neuartigen Materialien beschreibende Diskussion evident wird.

### Diskussion Materialeigenschaften:

Wie aus der voranstehenden Beschreibung ersichtlich ist, wurden nach Verstärkung mit Flachs oder Holzmehl erstmals Komposite auf PHB-Basis erzeugt, die Fasergefüllten Massepolymeren auf Erdöl-Basis, wie Polyethylen oder Polypropylen, von ihren Eigenschaften her ebenbürtig sind.

### Diskussion Umweltaspekte:

Abgesehen von den weiterhin Chemie-basierten Komponenten Poly-butylenglykol-adipat und Hexamethylendiisocyanat sind alle anderen Bestandteile der Komposite aus Biomaterialien aufgebaut. Die Herstellung erfolgt in umweltgerechten Verfahren. Obwohl die Untersuchungen zum biologischen Abbau noch ausstehen, ist anzunehmen, dass dieser in der Deponie ebenso leicht erfolgt wie der für die Komponenten getestete bzw. bekannte Bio-Abbau.

### Diskussion Ökonomische Aspekte:

Im Vergleich zu den vorher betrachteten Bio-Polyester-urethanen und daraus hergestellten Kompositen ergibt sich ein neuer ökonomischer Ansatz: Die teurere Komponente PEU macht in den neuen beschriebenen erfindungsgemäßen Blends nur noch 10 bis 30 % aus, übernimmt also fast die Rolle eines Additivs. In den meisten untersuchten Fällen entfielen 80 % Blend-Anteil auf das biogene "Grund-Material" PHB-co-HV. Da die neueren Fermentationsmethoden aus Molke oder Glyzerin zunehmend in die Richtung der Produktion von PHB-co-HV gehen, lässt die Kombination beider Entwicklungslinien in der Zukunft eine deutlich preisgünstigere Herstellung von Blends und Kompositen auf der Basis von PEU + PHB-co-HV erwarten.

Die Tatsache, das preisgünstige Füllmaterialien, wie Flachs oder Holzmehl, einen so enormen Verstärkungseffekt ausüben, lässt weiterhin die Erwartung zu, dass auf Basis solcher Komposite eine neue Materialschiene entstehen kann, die von Eigenschaften und Herstellungskosten her konkurrenzfähige Produkte für vielseitige Anwendungen liefert.

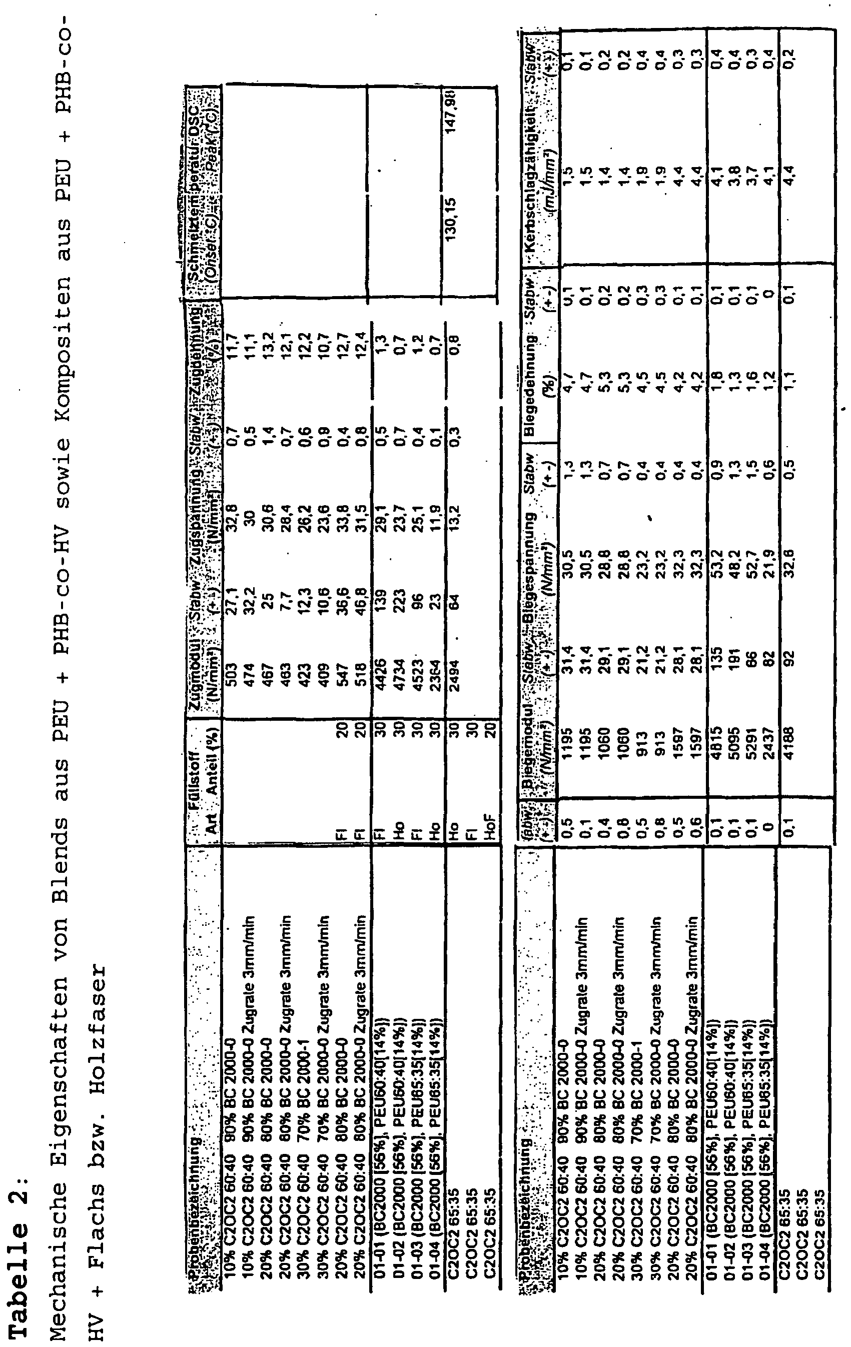

**Tabelle 3:**

| Vergleich: Zug- und Biegefestigkeit von Polypropylen, gefüllt mit Flachs und Baumwolle | | | | | | |
|---|---|---|---|---|---|---|
| Pressplatten | Zugfestigkeit [N/mm²] | Zugdehnung [%] | Zug-E-Modul [N/mm⁷] | Biegefestigkeit [N/mm²] | Biege-E-Modul [N/mm²] | Schlagzähigkeit [mJ/mm²] |
| Flachs mech. (40%) mit PP | 40 | 5,1 | 2000 | 80 | 4700 | 36 |
| Flachs DDA (40%) mit PP | 75 | 5,4 | 3600 | 145 | 7000 | 45 |
| PA-Faser/ Flachs (50:50) | 72.4 | 2,3 | 4040 | 143 | 5670 | 21 |
| | | | | | | |
| Röstflachs (25%) Spritzguß PP | 34 | | 4500 | 61 | 3400 | |
| Flachs DDA (25%) Spritzguß PP | 35 | | 4000 | 61 | 3200 | |
| Baumwolle (25%) Spritzguß PP | 40 | | 4000 | 65 | 3400 | |

## Patentansprüche

1. Verbundsystem, enthaltend
a) mindestens ein bioabbaubares Blockcopolyesterurethan, wobei das Blockcopolyesterurethan aus einem Hartsegment aus einem Polyhydroxyalkanoatdiol sowie einem Polyesterdiol-Weichsegment und/oder Polyester-ether-diol-Weichsegment ausgehend von einem Diol und/oder Triol und einer Dicarbonsäure oder Hydroxycarbonsäure und deren Derivaten als Co-Komponente durch Verknüpfung mit einem bifunktionellen Isocyanat gebildet ist und der Gewichtsanteil des Blockcopolyesterurethans von 0,1 bis 50 Gew.- % beträgt,
b) mindestens ein Polyhydroxyalkanoat (PHA), wobei der Gewichtsanteil des Polyhydroxyalkanoats von 99,9 bis 50 Gew.-% beträgt,
c) gegebenenfalls einen Füllstoff aus einem Polysaccharid und/oder dessen Derivaten, sowie
d) gegebenenfalls weitere bioverträgliche Additive.

2. Verbundsystem nach Anspruch 1, **dadurch gekennzeichnet, dass** das Blockcopolyesterurethan und das Polyhydroxyalkanoat als Blend, Polymermischung und/oder als Polymerlegierung vorliegen.

3. Verbundsystem nach einem der vorhergehenden Ansprüche, **dadurch gekennzeichnet, dass** die Elastizität, Zähigkeit und Zug-Dehnung des Verbundsystems über den Gewichtsanteil von Blockcopolyesterurethan und Füllstoff gezielt einstellbar ist.

4. Verbundsystem nach einem der vorhergehenden Ansprüche, **dadurch gekennzeichnet, dass** das Polyhydroxyalkanoat (PHA) ein Poly-2-hydroxyal-kanoat, Poly-3-hydroxyalkanoat und/oder ein Poly-4-hydroxyalkanoat ist, und/oder das Polyhydroxy-alkanoat aliphatische, araliphatische oder aromatische Seitenketten enthält und bevorzugt ausgewählt ist aus der Gruppe bestehend aus Poly-(R)-3-hydroxybutyrat (PHB) und/oder Poly-(R)-3-hydroxybutyrat-co-valerat (PHB-co-HV) oder das Polyhydroxyalkanoatdiol ein Poly-2-hydroxyalkanoat-diol, ein Poly-3-hydroxyalkanoat-diol und/oder ein Poly-4-hydroxyalkanoat-diol ist, und/oder das Polyhydroxyalkanoatdiol aliphatische, araliphatische oder aromatische Seitenketten enthält und bevorzugt ausgewählt ist aus der Gruppe bestehend aus Poly-3-hydroxybutyratdiol (PHB-Diol) und/oder Poly-3-hydroxybutyratco-3-hydroxy-valerat-diol (PHB-co-HV-Diol).

5. Verbundsystem nach einem der vorhergehenden Ansprüche, **dadurch gekennzeichnet, dass** das Diol aliphatisch, cycloaliphatisch, araliphatisch und/oder aromatisch ist, wobei das Diol bevorzugt ein niedermolekulares Diol mit 2 bis 10 C-Atomen und/oder ein Oligoether-diol und/oder ein Polyether-diol, beispielsweise Polyethylenglykol 200 oder 300, ist und/oder das Triol Glycerin ist.

6. Verbundsystem nach vorhergehendem Anspruch, **dadurch gekennzeichnet, dass** das Diol 1,4-Butandiol und/oder Diethylenglykol ist.

7. Verbundsystem nach einem der vorhergehenden Ansprüche, **dadurch gekennzeichnet, dass** die zur Herstellung des Weichsegmentes verwendete Dicarbonsäure aliphatisch, cycloaliphatisch, araliphatisch und/oder aromatisch ist.

8. Verbundsystem nach dem vorhergehenden Anspruch, **dadurch gekennzeichnet, dass** das Weichsegment ausgewählt ist aus der Gruppe bestehend aus Polybutylenglycol-adipat-diol (PBA-Diol), Poly-ε-caprolacton, Polydiethylenglykol-adipat-diol und/oder Mischungen hieraus.

9. Verbundsystem nach einem der vorhergehenden Ansprüche, **dadurch gekennzeichnet, dass** das bifunktionelle Isocyanat aliphatisch, cycloaliphatisch, araliphatisch und/oder aromatisch ist, insbesondere ausgewählt aus der Gruppe Tetramethylendiisocyanat, Hexamethylendiisocyanat und/oder Isophorondiisocyanat.

10. Verbundsystem nach einem der vorhergehenden Ansprüche, **dadurch gekennzeichnet, dass** der Füllstoff ausgewählt ist aus der Gruppe Cellulose, deren Derivate wie Celluloseacetate, Stärke, deren Derivate, Zellstoff und Papiermehl, Zellstoff, Papiermehl und Cellulosederivate, wie Celluloseacetate oder Celluloseether und/oder ein Naturprodukt wie Flachsfasern, Hanf oder Holzmehl, wobei die Cellulosederivate bevorzugt ausgewählt sind aus der Gruppe bestehend aus Methylcellulose, Ethylcellulose, Dihydroxypropylcellulose, Hydroxyethylcellulose, Hydroxypropylcellulose, Hydroxybutylcellulose, Methylhydroxybutylcellulose, Ethylhydroxybutylcellulose, Ethylhydroxyethylcellulose, Carboxyalkylcellulose, Sulfoalkylcellulose und Cyanoethylcellulose.

11. Verbundsystem nach einem der vorhergehenden Ansprüche, **dadurch gekennzeichnet, dass** der Füllstoff in Faserform vorliegt.

12. Verbundsystem nach einem der vorhergehenden Ansprüche, **dadurch gekennzeichnet, dass** als Additive biokompatible Haftvermittler, Farbpigmente, Entformungsmittel wie Talkum, Ruß, Polyethylenglykol und/oder Polyvinylalkohol enthalten sind.

13. Verbundsystem nach einem der vorhergehenden Ansprüche, **dadurch gekennzeichnet, dass** das Verbundsystem zwischen 1 und 90 Gew.-%, insbesondere 1 bis 70 Gew.-%, bezogen auf das gesamte Verbundsystem, des Füllstoffs enthält.

14. Verbundsystem nach einem der vorhergehenden Ansprüche, **dadurch gekennzeichnet, dass** das Verbundsystem schichtweise aufgebaut ist aus einer Füllstoffschicht, die mit dem Blockcopolyesterurethan und dem Polyhydroxyalkanoat beschichtet ist.

15. Verbundsystem nach einem der Ansprüche 1 bis 14, **dadurch gekennzeichnet, dass** dem Verbundsystem mindestens ein weiteres Polymer zugeblendet und/oder zulegiert ist.

16. Formkörper, Formteile und Extrudate hergestellt aus einem Verbundsystem nach einem der Ansprüche 1 bis 15.

17. Verwendung der Verbundsysteme nach einem der Ansprüche 1 bis 15 zur Herstellung von Beschichtungsmaterialien, Folien, Filmen, Laminaten, Formkörpern, Behältern, Verpackungsmaterialien, Formteilen, Extrudaten, Coating-Materialien und Medikamentendarreichungsformen, als Beschichtungsmaterial für Papier oder Stärke sowie als Material für verstärkte Klebeschichten oder als Verpackungsmaterial für Lebensmittel, insbesondere in Form von Taschen, Tüten und Hüllen oder für medizinische Implantate oder in der Galenik in Form von Tabletten, Kapseln oder Zäpfchen.

## Claims

1. Composite system, comprising
a) at least one biodegradable block copolyester urethane, the block copolyester urethane being formed from a hard segment comprising a polyhydroxyalkanoate diol and also a polyester diol soft segment and/or polyester ether diol soft segment starting from a diol and/or triol and a dicarboxylic acid or hydroxycarboxylic acid and derivatives thereof as co-component by crosslinking with a bifunctional isocyanate and the weight proportion of the block copolyester urethane is of 0.1 to 50% by weight,
b) at least one polyhydroxyalkanoate (PHA), **characterised in that** the weight proportion of the polyhydroxyalkanoate is of 99.9 to 50% by weight,
c) optionally a filler comprising a polysaccharide and/or derivatives thereof, and also
d) optionally further biocompatible additives.

2. Composite system according to claim 1, **characterised in that** the block copolyester urethane and the polyhydroxyalkanoate are present as a blend, polymer mixture and/or as polymer alloy.

3. Composite system according to one of the preceding claims, **characterised in that** the elasticity, toughness and tensile elongation of the composite system can be adjusted specifically via the weight proportion of block copolyester urethane and filler.

4. Composite system according to one of the preceding claims, **characterised in that** the polyhydroxyalkanoate (PHA) is a poly-2-hydroxyalkanoate, poly-3-hydroxyalkanoate and/or a poly-4-hydroxyalkanoate, and/or the polyhydroxyalkanoate contains aliphatic, araliphatic or aromatic side chains and is selected preferably from the group comprising poly-(R)-3-hydroxybutyrate (PHB) and/or poly-(R)-3-hydroxybutyrate-co-valerate (PHB-co-HV) or the polyhydroxyalkanoate diol is a poly-2-hydroxyalkanoate diol, a poly-3-hydroxyalkanoate diol and/or a poly-4-hydroxyalkanoate diol, and/or the polyhydroxy alkanoate diol contains aliphatic, araliphatic or aromatic side chains and is selected preferably from the group comprising poly-3-hydroxybutyrate diol (PHB diol) and/or poly-3-hydroxybutyrate-co-3-hydroxyvalerate diol (PHB-co-HV diol).

5. Composite system according to one of the preceding claims, **characterised in that** the diol is aliphatic, cycloaliphatic, araliphatic and/or aromatic, **characterised in that** the diol preferably is a low molecular diol with 2 to 10 C atoms and/or is an oligoether diol and/or a polyether diol, for example polyethylene glycol 200 or 300, and/or the triol is glycerine.

6. Composite system according to the preceding claim, **characterised in that** the diol is 1,4-butane diol and/or diethylene glycol.

7. Composite system according to one of the preceding claims, **characterised in that** the dicarboxylic acid used for producing the soft segment is aliphatic, cycloaliphatic, araliphatic and/or aromatic.

8. Composite system according to the preceding claim, **characterised in that** the soft segment is selected from the group consisting of polybutylene glycol adipate diol (PBA diol), poly-ε-caprolacton, polydiethylene glycol adipate diol and/or mixtures hereof.

9. Composite system according to one of the preceding claims, **characterised in that** the bifunctional isocyanate is aliphatic, cycloaliphatic, araliphatic and/or aromatic, preferably selected from the group of tetramethylene diisocyanate, hexamethylene diisocyanate and/or isophorone diisocyanate.

10. Composite system according to one of the preceding claims, **characterised in that** the filler is selected from the group of cellulose, derivatives thereof, such as cellulose acetates, starch, derivatives thereof, cellulose and paper dust, cellulose, paper dust and cellulose derivatives, such as cellulose acetates or cellulose ethers and/or flax fibres, hemp or wood dust, **characterised in that** the cellulose derivatives are preferably selected from the group consisting of methyl cellulose, ethyl cellulose, dihydroxypropyl cellulose, hydroxyethyl cellulose, hydroxypropyl cellulose, hydroxybutyl cellulose, methylhydroxybutyl cellulose, ethylhydroxybutyl cellulose, ethylhydroxyethyl cellulose, carboxyalkyl cellulose, sulphoalkyl cellulose and cyanoethyl cellulose.

11. Composite system according to one of the preceding claims, **characterised in that** the filler is present in fibre form.

12. Composite system according to one of the preceding claims, **characterised in that** additives, biocompatible adhesives, colour pigments, mould-release agents, such as talcum and/or carbon black, polyethylene glycol and/or polyvinyl alcohol are comprised as additives.

13. Composite system according to one of the preceding claims, **characterised in that** the composite system comprises between 1 and 90% by weight, in particular 1 to 70% by weight, relative to the total composite system, of the filter.

14. Composite system according to one of the preceding claims, **characterised in that** the composite system is constructed in layers consisting of a filler layer which is coated with the block copolyester urethane and the polyhydroxyalkanoate.

15. Composite system according to one of the claims 1 to 14, **characterised in that** at least one further polymer is blended and/or alloyed with the composite system.

16. Moulded articles, moulded parts and extrudates produced from a composite system according to one of the claims 1 to 15.

17. Use of the composite systems according to one of the claims 1 to 15 for the production of coating materials, foils, films, laminates, moulded articles, containers, packaging materials, moulded parts, extrudates, coating materials and medicine dispensers, as coating material for paper or starch and also as material for reinforced adhesive layers, or as packaging material for foodstuffs, particularly in the form of bags, plastic bags and wrapping or for medical implants or in galenics, in the form of tablets, capsules or suppositories.

## Revendications

1. Système composite comprenant :
a) au moins un copoly(esteruréthane) séquencé biodégradable, dans lequel copoly(esteruréthane) séquencé est formé d'un segment rigide dérivé d'un poly(hydroxyalcanoate)diol et d'un segment souple de polyesterdiol et/ou d'un segment souple de poly(esteréther)diol obtenu à partir d'un diol et/ou d'un triol et d'un acide dicarboxylique ou d'un acide hydroxycarboxylique et leurs dérivés, comme co-composants, par combinaison avec un isocyanate bifonctionnel, et la fraction pondérale du copoly(esteruréthane) séquencé est de 0,1 à 50 % en poids,
b) au moins un poly(hydroxyalcanoate) (PHA), dans lequel la fraction pondérale du poly(hydroxyalcanoate) est de 99,9 à 50 % en poids,
c) éventuellement, une charge choisie parmi un polysaccharide et/ou ses dérivés, ainsi que
d) éventuellement, d'autres additifs biocompatibles.

2. Système composite selon la revendication 1, **caractérisé en ce que** le copoly(esteruréthane) séquencé et le poly(hydroxyalcanoate) se présentent sous la forme d'un mélange, d'un mélange de polymères et/ou d'une association de polymères.

3. Système composite selon l'une quelconque des revendications précédentes, **caractérisé en ce que** l'élasticité, la ténacité et l'allongement à la traction du système composite peuvent être réglés de manière adéquate via la fraction pondérale du copoly(esteruréthane) séquencé et de la charge.

4. Système composite selon l'une quelconque des revendications précédentes, **caractérisé en ce que** le polyhydroxyalcanoate (PHA) est un poly(2-hydroxyalcanoate), un poly(3-hydroxyalcanoate) et/ou un poly(4-hydroxyalcanoate), et/ou **en ce que** le poly(hydroxyalcanoate) contient des chaînes latérales aliphatiques, araliphatiques ou aromatiques et est choisi, de préférence, dans le groupe constitué du poly((R)-3-hydroxybutyrate) (PHB) et/ou du poly((R)-3-hydroxybutyrate-co-valérate)) (PHB-co-HV) ou **en ce que** le poly(hydroxyalcanoate)diol est un poly(2-hydroxyalcanoate)diol, un poly(3-hydroxyalcanoate)diol et/ou un poly(4-hydroxyalcanoat)diol, et/ou **en ce que** le poly(hydroxyalcanoate)diol contient des chaînes latérales aliphatiques, araliphatiques ou aromatiques et est choisi, de préférence, dans le groupe constitué du poly(3-hydroxybutyrate)diol (PHB-Diol) et/ou du poly(3-hydroxybutyrate-co-3-hydroxyvalérate)diol (PHB-co-HV-Diol).

5. Système composite selon l'une quelconque des revendications précédentes, **caractérisé en ce que** le diol est aliphatique, cycloaliphatique, araliphatique et/ou aromatique, le diol étant, de préférence, un diol de faible poids moléculaire ayant 2 à 10 atomes de carbone et/ou est un oligoéther-diol et/ou un polyéther-diol, par exemple, le polyéthylèneglycol 200 ou 300 et/ou le triol est le glycérol.

6. Système composite selon la revendication précédente, **caractérisé en ce que** le diol est le 1,4-butane-diol et/ou le diéthylèneglycol.

7. Système composite selon l'une quelconque des revendications précédentes, **caractérisé en ce que** l'acide dicarboxylique utilisé pour fabriquer le segment souple est aliphatique, cycloaliphatique, araliphatique et/ou aromatique.

8. Système composite selon la revendication précédente, **caractérisé en ce que** le segment souple est choisi dans le groupe constitué du poly(butylèneglycol-adipate)diol (PBA-Diol), de la poly(ε-caprolactone), du poly(diéthylèneglycol-adipate)diol et/ou de leurs mélanges.

9. Système composite selon l'une quelconque des revendications précédentes, **caractérisé en ce que** l'isocyanate bifonctionnel est aliphatique, cycloaliphatique, araliphatique et/ou aromatique et est choisi, en particulier, dans le groupe comprenant le diisocyanate de tétraméthylène, le diisocyanate d'hexaméthylène et/ou le diisocyanate d'isophorone.

10. Système composite selon l'une quelconque des revendications précédentes, **caractérisé en ce que** la charge est choisie dans le groupe comprenant la cellulose, ses dérivés, tels que l'acétate de cellulose, l'amidon, ses dérivés, la pâte de cellulose et la farine de papier, la pâte de cellulose, la farine de papier et les dérivés de cellulose, tels que l'acétate de cellulose ou l'éther de cellulose et/ou un produit naturel, tel que les fibres de lin, le chanvre ou la farine de bois, les dérivés de cellulose étant choisis, de préférence, dans le groupe constitué de la méthylcellulose, de l'éthylcellulose, de la dihydroxypropylcellulose, de l'hydroxyéthylcellulose, de l'hydroxypropylcellulose, de l'hydroxybutylcellulose, de la méthylhydroxybutylcellulose, de l'éthylhydroxybutylcellulose, de l'éthylhydroxyéthylcellulose, de la carboxyalkylcellulose, de la sulfoalkylcellulose et de la cyanoéthylcellulose.

11. Système composite selon l'une quelconque des revendications précédentes, **caractérisé en ce que** la charge se présente sous forme de fibres.

12. Système composite selon l'une quelconque des revendications précédentes, **caractérisé en ce qu'**il contient comme additifs des agents tensioactifs, des pigments, des agents de démoulage, biocompatibles, tels que le talc, la suie, le polyéthylèneglycol et/ou le poly(alcool de vinyle).

13. Système composite selon l'une quelconque des revendications précédentes, **caractérisé en ce que** le système composite contient entre 1 et 90 % en poids, en particulier 1 à 70 % en poids de la charge par rapport à l'ensemble du système composite.

14. Système composite selon l'une quelconque des revendications précédentes, **caractérisé en ce que** le système composite se présente sous forme stratifiée à partir d'une couche de charge , qui est revêtue du copoly(esteruréthane) séquencé et du poly(hydroxyalcanoate).

15. Système composite selon l'une quelconque des revendications 1 à 14, **caractérisé en ce que** l'on mélange et/ou associe au système composite au moins un autre polymère.

16. Corps de moulage, pièces moulées et extrudats fabriqués à partir d'un système composite selon l'une quelconque des revendications 1 à 15.

17. Utilisation du système composite selon l'une quelconque des revendications 1 à 15 pour la fabrication de matériaux de revêtement, de feuilles, de films, de stratifiés, de corps moulés, de récipients, de matériaux d'emballage, de pièces moulées, d'extrudats, de matériaux d'enrobage et de formes de présentation pour médicaments, comme matériau de revêtement pour le papier ou l'amidon, ainsi que comme matériau pour les couches adhésives renforcées ou comme matériau d'emballage pour les produits alimentaires, en particulier sous la forme de poches, de sacs et d'enveloppes ou pour les implants médicaux ou en galénique sous la forme de comprimés, de gélules ou de suppositoires.
